# EUROPÄISCHE PATENTSCHRIFT

(11) **EP 2 766 626 B1**
(45) Veröffentlichungstag und Bekanntmachung des Hinweises auf die Patenterteilung: **10.05.2017**
(21) Anmeldenummer: 12773220.4
(22) Anmeldetag: 26.09.2012
(51) Int. Cl.: F16D 65/12

(54) **BREMSSCHEIBE**
BRAKE DISC
DISQUE DE FREIN

(30) Priorität: 15.10.2011 DE 102011116118
(43) Veröffentlichungstag der Anmeldung: 20.08.2014
(73) Patentinhaber: Daimler AG, 70327 Stuttgart (DE)
(72) Erfinder: ISENMANN, Bernd, 71263 Weil der Stadt (DE); MAYER, Ralph, 71034 Böblingen (DE); STEINRISSER, Niculo, 87058 Maennedorf (CH)
(74) Vertreter: JENSEN & SON
(86) Internationale Anmeldenummer: PCT/EP2012/004024
(87) Internationale Veröffentlichungsnummer: WO 2013/053432

(56) Entgegenhaltungen:
- WO-A1-2011/085749
- WO-A1-2012/003908
- DE-A1-102009 012 216

## Beschreibung

Die vorliegende Erfindung betrifft eine Bremsscheibe mit einem Topf und einem Reibring. Zudem betrifft die Erfindung einen Topf und einen Reibring für eine derartige Bremsscheibe sowie ein Verfahren zur Herstellung einer derartigen Bremsscheibe.

Eine Bremsscheibe ist üblicherweise Bestandteil einer Bremseinrichtung zum Bremsen eines Fahrzeugrades, insbesondere eines Kraftfahrzeuges. Die Bremsscheibe umfasst einen Reibring und einen Topf, wobei der Topf konzentrisch in einer Öffnung des Reibrings angeordnet ist. Die Verbindung zwischen einer Nabe eines Radträgers einer Radaufhängung und der Bremsscheibe ist mittels des Topfes realisiert, während der Bremsvorgang üblicherweise mittels mit dem Reibring zusammenwirkender Bremsbacken der Bremseinrichtung realisiert wird. Zur Übertragung des jeweiligen Drehmoments stehen der Topf und der Reibring z.B. über eine Verzahnung in Eingriff. Um die Bremsscheibe auch gegen axialen Verschiebungen des Topfes relativ zum Reibring zu sichern, die insbesondere durch auf das Fahrzeug einwirkende Querkräfte verursacht sein können, ist auch eine Axialsicherung des Reibrings am Topf notwendig.

In der DE 10 2009 012 216 A1 ist eine Bremsscheibe mit einem Reibring und einem darin angeordneten Topf beschrieben, die jeweils eine Verzahnung aufweisen und über welche sie miteinander in Eingriff stehen, um eine Drehmomentübertragung zwischen dem Reibring und dem Topf zu ermöglichen. Zur Axialsicherung weist der Topf an der Topfverzahnung Laschen auf, die den Reibring radial übergreifen.

Eine weitere derartige Bremsscheibe ist aus der WO 2011 / 085749 A1 bekannt.

Aus der DE 44 19 757 A1 ist eine Bremsscheibe bekannt, die radiale Ausprägungen am Topf aufweist, welche den Topf gegen den Reibring abstützen und somit axial sichern. Nachteilig hierbei ist, dass ein erhöhter radialer Platzbedarf entsteht. Zudem erfordert diese Bremsscheibe einen erhöhten Aufwand zur Kühlung.

Aus der DE 20 13 535 A ist eine andere Bremsscheibe bekannt, die entlang eines Randes des Topfes Vorsprünge aufweist, die in Schlitze des Reibrings eingreifen. Die Schlitze reduzieren jedoch die Übertragbarkeit des Drehmoments zwischen dem Topf und dem Reibring.

Eine weitere Bremsscheibe ist aus der DE 26 41 443 A1 bekannt. Hier weist der Topf Längsnuten auf, in die der Reibring eingreift, um die Radialsicherung zu gewährleisten. Der Reibring und der Topf bleiben jedoch axial verschiebbar. Weiter weist diese Bremsscheibe, insbesondere wegen der Längsnuten, eine geringe thermische Anpassungsfähigkeit des Reibrings und des Topfes, insbesondere bei Wärmeausdehnungen, auf.

Aus der DE 44 20 758 A1 und der DE 198 30 669 sind weitere Bremsscheiben bekannt, bei denen der Topf und der Reibring jeweils eine Verzahnung aufweisen, die ineinandergreifen, um eine Radialsicherung zu gewährleisten, während Vorsprünge bzw. Ausprägungen des Reibrings und/oder des Topfes eine Axialsicherung gewährleisten.

Die vorliegende Erfindung beschäftigt sich mit dem Problem, für eine Bremsscheibe eine verbesserte oder zumindest alternative Ausführungsform anzugeben, die sich insbesondere durch eine verbesserte Axialsicherung und eine hohe Übertragbarkeit eines Drehmoments zwischen dem Reibring und dem Topf der Bremsscheibe auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, zumindest eine Topfzahnlücke eines Topfes einer Bremsscheibe mit einer Lasche auszustatten, die einen zugehörigen Ringzahn eines Reibrings der Bremsscheibe an zumindest einem axialen Ende radial übergreift und axial in eine zugehörige Aussparung dieses Ringzahns eingreift. Der Ringzahn ist Bestandteil einer Ringverzahnung, die entlang eines Innenumfangs des Reibrings verläuft, welcher eine Öffnung aufweist. Der Topf weist einen Boden und eine davon abstehende und umlaufende Wand auf, in welche die Öffnung derart eingebracht ist, dass der Topf und der Reibring eine konzentrische Anordnung aufweisen. Die Topfzahnlücke ist Bestandteil einer Topfverzahnung, die entlang eines Außenumfangs der Wand verläuft und Topfzähne aufweist, die jeweils durch eine derartige Topfzahnlücke voneinander getrennt sind. Die Topfverzahnung sowie die Ringverzahnung verlaufen ringförmig geschlossen. Ihre Zähne erstrecken sich hierbei in axialer Richtung, wobei sich die axiale Richtung auf eine Rotationsrichtung der Bremsscheibe und somit auf die axiale Richtung der Bremsscheibe bezieht. Entsprechend bezieht sich die radiale Richtung auf die senkrecht zur Axialrichtung verlaufende Richtung. Die Topfverzahnung ist durch die radial nach außen vorstehenden Topfzähne und die Topzahnlücken ausgebildet, während die Ringverzahnung durch die Ringzähne ausgebildet ist, die radial nach innen vorstehen und jeweils durch Ringzahnlücken voneinander getrennt sind. Die Topfverzahnung und die Ringverzahnung sind zudem komplementär ausgebildet, so dass die Topfzähne in die Ringzahnlücken und die Ringzähne in die Topfzahnlücken radial eingreifen. Hiermit ist eine Drehsicherung zwischen dem Topf und dem Reibring gewährleistet, womit ein Drehmoment zwischen dem Topf und dem Reibring übertragbar ist.

Dem Erfindungsgedanken entsprechend weist der Topf bzw. die Topfverzahnung zumindest eine erste Topfzahnlücke auf, an der die Lasche ausgeformt ist. Die Lasche steht radial nach außen ab und kann den mit der zugehörigen Topfzahnlücke in Eingriff stehenden Ringzahn kontaktieren. Um eine Axialsicherung des Topfes relativ zum Reibring zu gewährleisten übergreift die Lasche den zugehörigen Ringzahn radial an einem seiner axialen Enden. Ein axiales Ende ist das dem Topfboden zugewandte oder das vom Topfboden abgewandte axiale Ende des jeweiligen Ringzahns. Bevorzugt ist eine Ausführungsform, bei der die Lasche den zugehörigen Ringzahn an einem ersten axialen Ende übergreift. Durch die somit gewährleistete Axialsicherung können zusätzliche Ausprägungen sowie Aussparungen in bzw. am Topf bzw. Reibring entfallen. Dies hat zur Folge, dass die Bremsscheibe zur Gewährleistung der Axialsicherung einen reduzierten Platz, insbesondere in radialer Richtung, benötigt und die Ausdehnung der Bremsscheibe in radialer Richtung reduziert werden kann. Zudem erlaubt die Bremsscheibe durch die platzsparende Ausbildung eine vereinfachte Kühlung.

Die radial nach außen abstehende Lasche ist beispielsweise radial nach außen gekrümmt. Die Krümmung ist vorzugsweise derart ausgebildet bzw. ein Krümmungsradius der Lasche ist derart gewählt, dass die Lasche einen Außendurchmesser bzw. einen Umkreis des Topfs bzw. der Wand nicht überschreitet. Zudem sind die Lasche sowie die zugehörige erste Topfzahnlücke vorzugsweise derart ausgebildet, dass der Krümmungsradius der Lasche mehr als 2,5 mm beträgt. Durch die radiale Krümmung kann die Lasche in axialer Ansicht insbesondere W-förmig ausgebildet sein.

Bevorzugt ist eine Ausführungsform, bei der die Topfverzahnung eine geschlossene Form aufweist und entlang der gesamten Umfangsrichtung des Außenumfangs der Wand verläuft. Zweckmäßig weist auch die komplementär ausgebildete Ringverzahnung eine geschlossene Form auf und verläuft entlang der gesamten Umfangsrichtung des Innenumfangs des Reibrings.

Erfindungsgemäß weist der Ringzahn, der von der Lasche radial übergriffen ist, an seinem von der Lasche übergriffenen Ende, das heißt bevorzugt an seinem ersten axialen Ende, besagte axiale Aussparung auf. Die Lasche ist zudem derart ausgebildet bzw. geformt, dass sie in diese Aussparung, die auch als Ausnehmung bezeichnet werden könnte, axial eingreift. Durch den axialen Eingriff der Lasche in die axiale Aussparung des zugehörigen Ringzahns ist eine formschlüssige axiale Sicherung des Reibrings bezüglich des Topfes gewährleistet. Vorstellbar sind auch Ausführungsformen, bei denen der Topfzahn an beiden axialen Enden derartige axiale Aussparungen aufweist. Folglich können dann zwei Laschen vorgesehen sein, die beide axiale Enden radial übergreifen und axial in die jeweilige Aussparung eingreifen. Bevorzugt ist jedoch eine Ausführungsform, bei dem dies lediglich am ersten axialen Ende realisiert ist. Zudem können alle Ringzähne an diesem axialen Ende eine derartige axiale Aussparung aufweisen, so dass bei der Montage nicht auf die Zuordnung der Ringzähne zu Topfzahnlücken mit Laschen geachtet werden muss, sofern alle Ringzähne gleich ausgebildet sind.

Gemäß einer weiteren bevorzugten Ausführungsform weist die Topfverzahnung wenigstens eine zweite Topfzahnlücke auf, an der ein Vorsprung ausgeformt ist. Der Vorsprung der zweiten Topfzahnlücke steht radial nach außen ab und übergreift den mit dieser Topfzahnlücke in Eingriff stehenden Ringzahn an einem seiner axialen Enden. Der Vorsprung ist dementsprechend an diesem axialen Ende der zweiten Topfzahnlücke angeordnet. Bevorzugt ist hierbei eine Ausführungsform, bei der die Lasche den zugehörigen Ringzahn am ersten axialen Ende übergreift, während der Vorsprung den zugehörigen Ringzahn am zweiten axialen Ende übergreift. Das bedeutet beispielsweise, dass während die Lasche den zugehörigen Ringzahn an seinem dem Boden des Topfes zugewandten axialen Ende radial übergreift und gegebenenfalls axial in die axiale Aussparung eingreift, übergreift der Vorsprung den Ringzahn, mit dem die zugehörige zweite Topfzahnlücke in Eingriff steht, an dem vom Boden abgewandten axialen Ende. Somit gewährleistet die Lasche die Axialsicherung in die eine Axialrichtung, während der Vorsprung die Axialsicherung in die andere entgegengesetzte Axialrichtung gewährleistet. Der Vorsprung ist zudem vorzugsweise derart ausgebildet, dass seine radiale Ausdehnung den Umkreis des Topfes bzw. der Wand nicht überschreitet.

Bevorzugt ist dabei eine Ausführungsform, bei der erste Topfzahnlücken mit zugehörigen Laschen und zweite Topfzahnlücken mit zugehörigen Vorsprüngen entlang der Umfangsrichtung abwechselnd zwischen jeweils benachbarten Topfzähnen angeordnet sind. Somit ist insbesondere eine gleichmäßige Sicherung in beiden Axialrichtungen gewährleistet. Zudem erlauben die ersten Topfzahnlücken sowie die Laschen und die zweiten Topfzahnlücken eine verbesserte thermische Anpassungsfähigkeit des Topfes und des Reibrings. Das heißt, dass insbesondere bei Wärmeausdehnungen des Topfes und/oder des Reibrings eine verbesserte Anpassung gegeben ist.

Bei einer vorteilhaften Weiterbildung der erfindungsgemäßen Lösung weist die Wand eine konische Form auf. Die Wand weist beispielsweise an dem dem Topfboden zugewandten Ende einen kleineren Außendurchmesser auf, als an dem vom Topfboden abgewandten Ende. Alternativ oder zusätzlich ist die Wand derart ausgebildet, dass sie einen Axialabschnitt mit einer konischen Form aufweist. Eine derart ausgebildete Wand führt zu einer zusätzlichen axialen Sicherung, womit eine Verschiebbarkeit des Reibrings relativ zum Topf in die entsprechende Axialrichtung unterbunden oder zumindest reduziert ist.

Es sei darauf hingewiesen, dass ein Topf für eine erfindungsgemäße Bremsscheibe, der zumindest eine Topfzahnlücke mit einem Vorsprung und/oder zumindest eine Topfzahnlücke mit einer freigeschnittene Lasche aufweist, die noch nicht ausgeformt, das heißt insbesondere nicht radial deformiert, ist, auch als Solcher zum Umfang dieser Erfindung gehört.

Es sei ferner darauf hingewiesen, dass auch ein Reibring für eine erfindungsgemäße Bremsscheibe, der zumindest einen Ringzahn aufweist, welcher an zumindest einem axialen Ende, vorzugsweise an seinem ersten axialen Ende, die axiale Aussparung aufweist, als Solcher zum Umfang dieser Erfindung gehört.

Die Bremsscheibe kann nun entsprechend einer vorteilhaften Verwendung des Reibrings bzw. des Topfes gemäß dem im Folgenden beschriebenen Verfahren hergestellt werden.

Zunächst wird der Topf derart in die Öffnung des Reibrings eingesetzt, dass jeweils ein Ringzahn und eine Topfzahnlücke sowie ein Topfzahn und eine Ringzahnlücke in Eingriff stehen. Damit ist auch die konzentrische Anordnung des Topfes und des Reibrings gegeben. Anschließend wird die jeweilige Lasche der ersten Topfzahnlücke radial nach außen deformiert, bis die jeweilige Lasche den jeweiligen Ringzahn am jeweiligen axialen Ende radial übergreift und ihn dadurch in der jeweiligen Topfzahnlücke axial sichert. Vorstellbar sind auch Ausführungsformen, bei denen die Lasche vor der erwähnten Deformation bereits in der entsprechenden Topfzahnlücke, z.B. durch Freischneiden eines die Lasche bildenden Abschnitts der Topfzahnlücke, ausgebildet ist. Vorzugsweise erfolgt die radiale Deformation durch Verstemmen, so dass insbesondere eine verstärkte Verbindung zwischen dem Topf und dem Reibring gegeben ist.

Entsprechend einer bevorzugten Ausführungsform wird die jeweilige Lasche anschließend an dem das jeweilige axiale Ende des zugehörigen Ringzahns radial übergreifenden Bereich axial in die Aussparung des Ringzahns deformiert bzw. gedrückt, die an dem zugehörigen axialen Endes des Ringzahns ausgeformt ist. Somit ist eine formschlüssige Axialsicherung gegeben.

Bevorzugt sind dabei Ausführungsformen, bei denen die jeweilige durch das Verstemmen und/oder durch das Drücken bewirkte Deformation der Lasche plastisch-elastisch erfolgt. Die derartige Deformation gewährleistet insbesondere eine erhöhte Belastbarkeit der Bremsscheibe.

Das Verstemmen der Lasche in den jeweiligen Verfahrensschritten kann kraftgesteuert und/oder weggesteuert erfolgen. Die Deformation erfolgt also solange bis eine vorgegebene Form der Lasche erreicht ist und/oder bis eine vorgegebene Kraft verbraucht ist.

Im Laufe des Verfahrens können zudem die Vorsprünge der zweiten Topfzahnlücken ausgestellt werden. Das Aufstellen der Vorsprünge kann dabei in einem separaten, insbesondere vorausgehenden, Verfahrensschritt erfolgen oder gleichzeitig zu einem der anderen und erwähnten Verfahrensschritte verlaufen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Explosionsdarstellung einer Bremsscheibe,
- Fig. 2: einen Schnitt durch einen Topf,
- Fig. 3: eine isometrische Ansicht eines Reibrings.

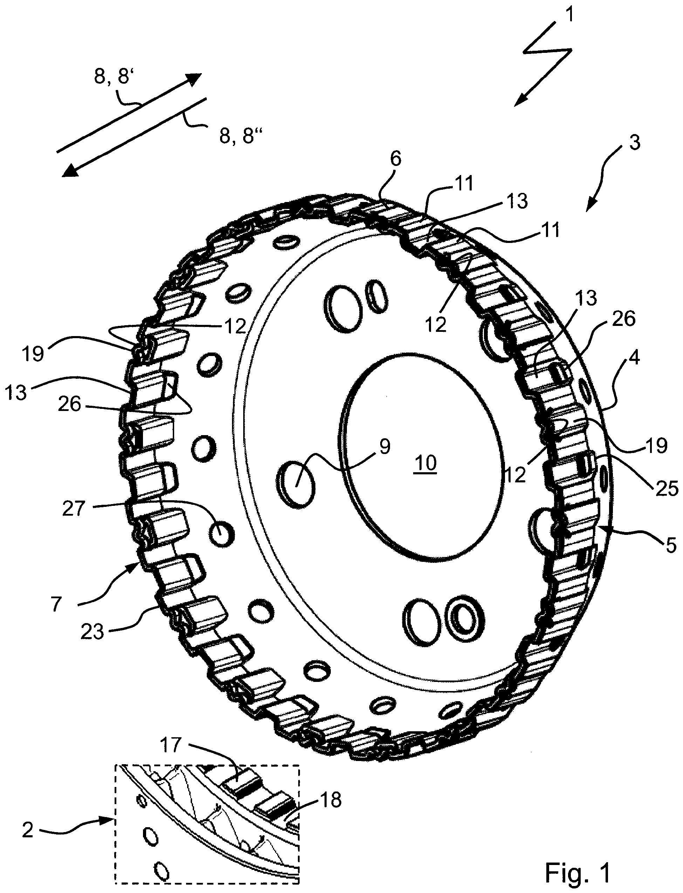

Entsprechend Fig. 1 weist eine Bremsscheibe 1 einen abschnittsweise gezeigten Reibring 2 sowie einen Topf 3 auf. Der Topf 3 umfasst einen Boden 4 sowie eine vom Boden 4 abstehende und in Umfangsrichtung verlaufende Wand 5. An einem Außenumfang 6 der Wand 5 ist zudem eine Topfverzahnung 7 ausgeformt, wobei die Topfverzahnung 7 als Axialverzahnung ausgestaltet ist und sich entlang der gesamten Umfangsrichtung erstreckt. Die axiale Richtung ist durch Pfeile 8 angedeutet und verläuft parallel zu einer Rotationsachse der Bremsscheibe 1. Zudem weist der Boden 4 Schraublöcher 9 auf, durch die der Topf 3 bzw. die Bremsscheibe 1 an einer Nabe eines Radträgers einer Radaufhängung eines Fahrzeuges befestigt werden kann. Weiter weist der Boden 4 eine Zentralöffnung 10 auf, die zentriert am Topfboden 4 angeordnet ist und z.B. zur Zentrierung der Bremsscheibe 1 an der Nabe dient. Die Topfverzahnung 7 ist durch radial nach außen vorstehende Topfzähne 11 ausgebildet, die jeweils durch Topfzahnlücken 12, 13 entlang der Umfangsrichtung voneinander beabstandet sind, wobei die Topfzähne 11 die gleiche Form und Größe aufweisen.

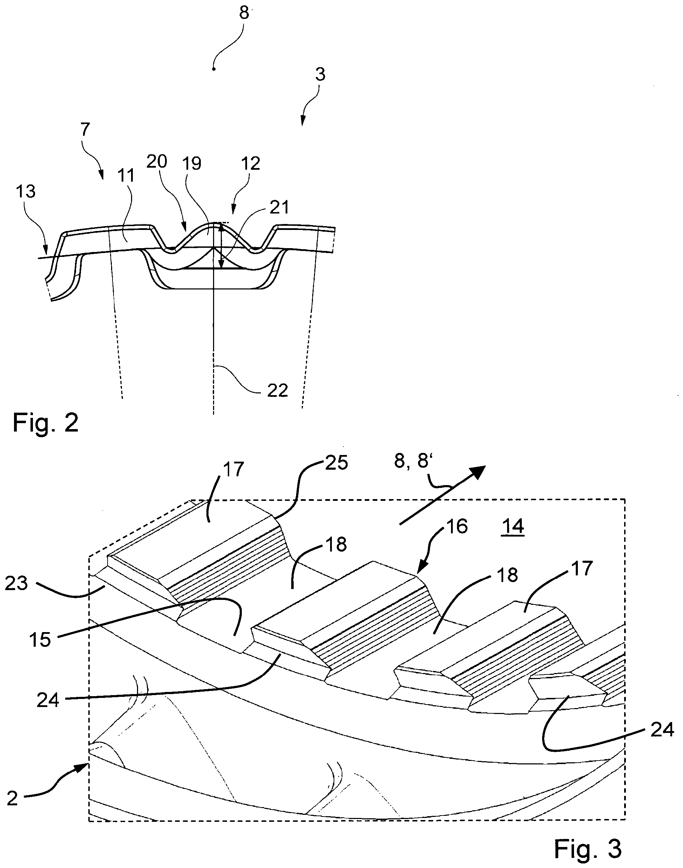

Fig. 3 zeigt den Reibring 2, der eine zentrisch angeordnete Öffnung 14 aufweist. Somit umfasst der Reibring 2 einen die Öffnung 14 umschließenden Innenumfang 15, an dem eine Ringverzahnung 16 des Reibrings 2 ausgebildet ist. Die Ringverzahnung 16 ist als Axialverzahnung ausgestaltet und umfasst radial nach innen vorstehende Ringzähne 17, die jeweils durch eine Ringzahnlücke 18 in Umfangsrichtung voneinander beabstandet sind. Die Ringzähne 17 sowie die Ringzahnlücken 18 weisen jeweils die gleiche Form und Größe auf. Die Topfverzahnung 7 und die Ringverzahnung 16 sind zudem komplementär zueinander ausgebildet, so dass je ein Topfzahn 11 in eine Ringzahnlücke 18 sowie ein Ringzahn 17 in eine Topfzahnlücke 12, 13 eingreift. Durch diesen Eingriff der Topfverzahnung 7 und der Ringverzahnung 16 ist eine Drehsicherung gewährleistet, die eine Übertragung eines Drehmoments zwischen dem Topf 3 und dem Reibring 2 erlaubt.

Wie in den Fig. 1 bis 3 zu sehen, weist die Topfverzahnung 7 erste Topfzahnlücken 12 auf, an denen eine Lasche 19 ausgeformt ist. Die Laschen 19 der Topfzahnlücken 12 sind durch freigeschnittene Endabschnitte 20 der jeweiligen Topfzahnlücke 12 gebildet, die aus der übrigen Kontur des jeweiligen Topfzahnlücke 12 herausgeformt sind. Die jeweilige Lasche 19 ist radial nach außen gekrümmt, wobei ein Krümmungsradius 21 der gekrümmten Lasche 19 derart gewählt ist, dass die radial nach außen gekrümmte Lasche 19 einen Außenradius 22 der Wand 5 nicht überschreitet. Durch die Krümmung ist die jeweilige Lasche 19 in einer Axialansicht, wie in Fig. 2 angedeutet, W-förmig ausgebildet. Die radial nach außen gekrümmte Lasche 19 ist zudem derart ausgebildet, dass sie den Ringzahn 17, mit dem die zugehörige Topfzahnlücke 12 im Eingriff steht, an einem ersten, vom Boden 4 abgewandten axialen Ende 23 radial übergreift. Der jeweilige Ringzahn 17 besitzt im gezeigten Beispiel an seinem ersten axialen Ende 23 eine in der Umfangsrichtung verlaufende axiale Aussparung 24, in welche die Lasche 19 zusätzlich axial eingreift. Somit ist eine Axialsicherung des Topfes 3 relativ zum Reibring 2 entlang einer ersten Axialrichtung 8' gewährleistet. Um die Axialsicherung auch in die andere Axialrichtung 8" zu gewährleisten, weist die Topfverzahnung 7 zweite Topfzahnlücken 13 auf, die jeweils einen radial nach außen vorstehenden Vorsprung 26 umfassen, der an einem dem Boden 4 zugewandten zweiten axialen Ende 25 der jeweiligen zweiten Topfzahnlücke 13 angeordnet ist. Der jeweilige Vorsprung 26 übergreift den mit der zugehörigen Topfzahnlücke 13 in Eingriff stehenden Ringzahn 17 am zweiten axialen Ende radial. Hiermit ist auch eine Axialsicherung in die zweite Axialrichtung 8" sichergestellt. Für die Montage von Topf 3 und Reibring 2 können die ausgestellten Vorsprünge 26 als Axialanschlag dienen, während die anschließend ausgestellten Laschen 19 die Axialsicherung bewirken.

Um eine Kühlung der Bremsscheibe 1 zu ermöglich bzw. zu vereinfachen sind an der Wand 5 zwischen der Topfverzahnung 7 und dem Boden 4 Kühlungsöffnungen 27 vorgesehen. Die Kühlungsöffnungen 27 sind hierbei gleichmäßig entlang der Umfangsrichtung der Wand 5 verteilt und können der Zuführung von beispielsweise Luft zur Kühlung der Bremsscheibe 1 dienen.

Es versteht sich, dass das erste axiale Ende 23 und das zweite axiale Ende 25 sowie die entsprechenden Übergriffe der Laschen 19 bzw. der Vorsprünge 26 vertauschbar sind. Das heißt, dass das erste axiale Ende 23 dem Boden 4 zugewandt sein kann, während das zweite axiale Ende 25 vom Boden abgewandt ist.

Die Bremsscheibe 1 kann dabei derart hergestellt sein, dass zunächst der Topf 3, bei der die Laschen 19 noch nicht deformiert sind, in die Öffnung 14 des Reibrings 2 eingesetzt wird, so dass der Topf 3 und der Reibring 2 konzentrisch angeordnet sind und jeweils ein Topfzahn 11 in eine Ringzahnlücke 18 eingreift, während ein Ringzahn 17 in eine Topfzahnlücke 12, 13 eingreift. Die Vorsprünge 26 der zweiten Topfzahnlücken 13 gewährleisten eine entsprechende axiale Anordnung des Topfes 3 und des Reibrings 2 und dienen als Axialanschlag. Anschließend wird die jeweilige Lasche 19 radial deformiert, wobei diese Deformation vorzugsweise durch ein Verstemmen der Lasche 19 erfolgt. Die radiale Deformation der Lasche 19 wird derart ausgeführt, dass die jeweilige Lasche 19 den zugehörigen Ringzahn 17 an zumindest einem axialen Ende 23, 25, hier am ersten axialen Ende 23 übergreift. Gleichzeitig wird der den Ringzahn 17 übergreifende Bereich der jeweils radial nach außen deformierten Lasche 19 in die zugehörige Aussparung 24 am zweiten axialen Ende 25 des Ringzahns 17 axial eingedrückt. Somit ist der Reibring 2 relativ zum Topf 3 in beiden Axialrichtungen 8', 8" gesichert.

## Patentansprüche

1. Bremsscheibe (1), insbesondere eines Kraftfahrzeuges, mit einem Topf (3), der einen Boden (4) und eine davon abstehende und umlaufende Wand (5) aufweist, und mit einem Reibring (2), der eine Öffnung (14) aufweist, in der die Wand (5) angeordnet ist, wobei
- der Topf (3) und der Reibring (2) konzentrisch angeordnet sind,
- die Wand (5) eine entlang eines Außenumfangs (6) verlaufende axiale Topfverzahnung (7) mit radial nach außen vorstehenden Topfzähnen (11) aufweist,
- in Umfangsrichtung zwischen benachbarten Topfzähnen (11) je eine Topfzahnlücke (12, 13) angeordnet ist,
- der Reibring (2) eine entlang eines Innenumfangs (15) verlaufende axiale Ringverzahnung (16) aufweist, die komplementär zur Topfverzahnung (7) ausgebildet ist und radial nach innen vorstehende Ringzähne (17) aufweist,
- wobei in Umfangsrichtung zwischen benachbarten Ringzähnen (17) je eine Ringzahnlücke (18) angeordnet ist,
- die Topfzähne (11) in die Ringzahnlücken (18) eingreifen,
- die Ringzähne (17) in die Topfzahnlücken (12, 13) eingreifen,
- an wenigstens einer ersten Topfzahnlücke (12) eine Lasche (19) ausgeformt ist, die radial nach außen absteht und den jeweiligen, mit dieser Topfzahnlücke (12) in Eingriff stehenden Ringzahn (17) an einem ersten axialen Ende (23, 25) radial übergreift
**dadurch gekennzeichnet,**
**dass** der von der Lasche (19) übergriffene Ringzahn (17) an seinem ersten axialen Ende (23, 25) eine axiale Aussparung (24) aufweist, in welche die Lasche (19) axial eingreift.

2. Bremsscheibe nach Anspruch 1,
**dadurch gekennzeichnet,**
**dass** an wenigstens einer zweiten Topfzahnlücke (13) ein Vorsprung (26) ausgeformt ist, der radial nach außen absteht und den jeweiligen, mit dieser Topfzahnlücke (13) in Eingriff stehenden Ringzahn (17) an einem zweiten axialen Ende (23, 25) radial übergreift.

3. Bremsscheibe nach Anspruch 2,
**dadurch gekennzeichnet,**
**dass** erste Topfzahnlücken (12) und zweite Topfzahnlücken (13) entlang der Umfangsrichtung abwechselnd zwischen jeweils benachbarten Topfzähnen (11) angeordnet sind.

4. Bremsscheibe nach einem der Ansprüche 1 bis 3,
**dadurch gekennzeichnet,**
**dass** die Wand (5) eine konische Form oder einen Axialabschnitt mit einer konischen Form aufweist.

5. Topf (3) für eine Bremsscheibe (1) nach einem der Ansprüche 1 bis 4, mit zumindest einer mit einem Vorsprung (26) nach Anspruch 2 ausgestatteten Topfzahnlücke (12, 13) und mit einer freigeschnittenen, noch nicht ausgeformten Lasche (19) .

6. Reibring (2) für eine Bremsscheibe (1) nach einem der Ansprüche 1 bis 4, mit zumindest einem Ringzahn (17), der an seinem ersten axialen Ende (23, 25) eine axiale Aussparung (24) aufweist.

7. Verfahren zur Herstellung einer Bremsscheibe (1) nach einem der Ansprüche 1 bis 4, wobei
- der Topf (3) derart in die Öffnung (14) des Reibrings (2) eingesetzt wird, dass jeweils eine Topfzahnlücke (12, 13) und ein Ringzahn (17) sowie eine Ringzahnlücke (18) und ein Topfzahn (11) in Eingriff stehen, und
- die jeweilige Lasche (19) der ersten Topfzahnlücke (12) zumindest bereichsweise, insbesondere durch Verstemmen, radial in Richtung des zugehörigen ersten Ringzahns (17) deformiert wird.

8. Verfahren nach Anspruch 7,
**dadurch gekennzeichnet,**
**dass** die jeweilige Lasche (19), insbesondere durch Drücken, axial in eine Aussparung (24) des zugehörigen Ringzahns (17) eingedrückt wird.

9. Verfahren nach Anspruch 7 oder 8,
**dadurch gekennzeichnet,**
**dass** beim jeweiligen Verstemmen und/oder Drücken eine plastisch-elastische Deformation erfolgt.

## Claims

1. Brake disc (1), in particular of a motor vehicle, having a chamber (3) which has a bottom (4) and a peripheral wall (5) protruding therefrom, and having a friction ring (2) which has an opening (14), in which the wall (5) is arranged, wherein
- the chamber (3) and the friction ring (2) are concentrically arranged,
- the wall (5) has an axial chamber toothing (7), extending around an outer periphery (6), with radially outwardly projecting chamber teeth (11),
- a chamber tooth gap (12, 13) is arranged in the circumferential direction between adjacent chamber teeth (11),
- the friction ring (2) has an axial ring toothing (16), extending around an inner periphery (15), which is designed to correspond to the chamber toothing (7) and has radially inwardly projecting ring teeth (17),
- wherein a ring tooth gap (18) is arranged in the circumferential direction between adjacent ring teeth (17),
- the chamber teeth (11) engage in the ring teeth gaps (12, 13),
- a tab (19) is formed at at least one first chamber tooth gap (12), the tab (19) projecting radially outwards and radially engaging over the ring tooth (17) in engagement with this chamber tooth gap (12) at a first axial end (23, 25),
**characterised in that**
- the ring tooth (17), over which the tab (19) engages, has at its first axial end (23, 25) an axial recess (24), into which the tab (19) axially engages.

2. Brake disc according to claim 1,
**characterised in that**
a projection (26) is formed at at least one second chamber tooth gap (13), the projection (26) projecting radially outwards and radially engaging over the ring tooth (17), in engagement with this chamber tooth gap (13), at a second axial end (23, 25).

3. Brake disc according to claim 2,
**characterised in that**
first chamber tooth gaps (12) and second chamber tooth gaps (13) are arranged in an alternating manner around the periphery between adjacent chamber teeth (11).

4. Brake disc according to one of claims 1 to 3,
**characterised in that**
the wall (5) has a conical shape or an axial portion with a conical shape.

5. Chamber (3) for a brake disc (1) according to one of claims 1 to 4, having at least one chamber tooth gap (12, 13) provided with a projection (26) according to claim 2 and a cut-free, not yet formed tab (19).

6. Friction ring (2) for a brake disc (1) according to one of claims 1 to 4, having at least one ring tooth (17) which has an axial recess (24) at its first axial end (23, 25).

7. Method for producing a brake disc (1) according to one of claims1 to 4,
wherein
- the chamber (3) is inserted into the opening (14) of the friction ring (2) in such a way that in each case a chamber tooth gap (12, 13) and a ring tooth (17) as well as a ring tooth gap (18) and a chamber tooth (11) are in engagement, and
- the respective tab (19) of the first chamber tooth gap (12) is deformed at least in areas, in particular by caulking, radially in the direction of the associated first ring tooth (17).

8. Method according to claim 7,
**characterised in that**
the respective tab (19) is forced, in particular by pressing, axially into a recess (24) of the associated ring tooth (17).

9. Method according to claim 7 or 8,
**characterised in that**
a plastic-elastic deformation is realised in the caulking and / or pressing.

## Revendications

1. Disque (1) de frein, en particulier destiné à un véhicule automobile, comprenant une cuvette (3), qui présente un fond (4) et une paroi (5) l'entourant et s'en écartant, et une bague de friction (2) qui présente une ouverture (14) dans laquelle est disposée la paroi (5),
- la cuvette (3) et la bague de friction (2) sont disposées concentriquement,
- la paroi (5) présentant une denture axiale (7) de cuvette s'étendant le long de la périphérie extérieure (6), des dents (11) de cuvette faisant saillie radialement vers l'extérieur,
- dans la direction circonférentielle entre dents adjacentes (11) de cuvette est aménagé respectivement un interstice (12, 13) de dents de cuvette,
- la bague de friction (2) présentant une denture annulaire (16) axiale s'étendant le long d'une circonférence intérieure (15), qui vient compléter la denture (7) de cuvette et présentant des dents annulaires (17) faisant saillie radialement vers l'intérieur,
- dans la direction circonférentielle entre des dents annulaires adjacentes (17) étant disposé un interstice (18) de dent annulaire,
- les dents (11) de cuvette s'engrènent dans les interstices (18) de dent annulaire,
- les dents annulaires (17) s'engrènent dans les interstices (12, 13) de dent de cuvette,
- sur au moins l'un premier interstice (12) de dent de cuvette est formée une patte (19) qui s'écarte radialement vers l'extérieur et empiète radialement sur la denture annulaire (17) respective engrenée avec ledit interstice (12) de dent de cuvette sur une première extrémité axiale (23, 25), **caractérisé en ce que** la dent annulaire (17) empiétée par la patte (19) sur sa première extrémité axiale (23, 25) présente un évidement (24) axial dans lequel s'engrène axialement la patte (19).

2. Disque de frein selon la revendication 1, **caractérisé en ce que** sur au moins un second interstice (13) de dent de cuvette est formée une partie saillante (26) qui s'écarte radialement vers l'extérieur et qui empiète radialement sur la dent annulaire (17) en prise avec ledit interstice (13) de dent de cuvette sur une seconde extrémité axiale (23, 25).

3. Disque de frein selon la revendication 2, **caractérisé en ce que** les premiers interstices (12) de dent de cuvette et les seconds interstices (13) de dent de cuvette sont disposés le long de la direction circonférentielle en alternance entre chacune des dents adjacentes (11) de cuvette.

4. Disque de frein selon l'une quelconque des revendications 1 à 3, **caractérisé en ce que** la paroi (5) présente une forme conique ou une partie axiale ayant une forme conique.

5. Cuvette (3) pour un disque (1) de frein selon l'une quelconque des revendications 1 à 4, ayant au moins un interstice (12, 13) de dent de cuvette équipé d'une partie en saillie (26) selon la revendication 2 et ayant au moins une patte dégagée pas encore formée (19).

6. Bague de friction (2) pour un disque de frein (1) selon l'une quelconque des revendications précédentes 1 à 4, ayant au moins une dent annulaire (17) qui présente sur sa première extrémité axiale (23, 25) un évidement axial (24).

7. Procédé de production d'un disque de frein (1) selon l'une quelconque des revendications 1 à 4,
- la cuvette (3) étant insérée dans l'ouverture (14) de la bague de friction (2) de telle sorte que respectivement un interstice (12, 13) de dent de cuvette et une dent annulaire (17) ainsi qu'un interstice (18) de dent annulaire et une dent (11) de cuvette s'engrènent, et
- la patte respective (19) du premier interstice (12) de dent de cuvette est déformée, au moins à certains endroits, en particulier par matage, radialement dans la direction de la première dent annulaire (17) correspondante.

8. Procédé selon la revendication 7, **caractérisé en ce que** la patte respective (19), est enfoncée, en particulier par pression, axialement dans un évidement (24) de la dent annulaire (17) correspondante.

9. Procédé selon la revendication 7 ou la revendication 8, **caractérisé en ce que** le matage et/ou la pression engendre respectivement une déformation plastique-élastique.
